# FASCICULE DE BREVET EUROPEEN

(11) **EP 2 766 854 B1**
(45) Date de publication et mention de la délivrance du brevet: **11.10.2017**
(21) Numéro de dépôt: 12780247.8
(22) Date de dépôt: 12.10.2012
(51) Int. Cl.: G06K 19/077, B42D 25/24

(54) **PROCÉDÉ ET DISPOSITIF DE FABRICATION D'UN SUPPORT DESTINÉ A RECEVOIR UN DISPOSITIF ÉLECTRONIQUE ET LE SUPPORT CORRESPONDANT**
VERFAHREN UND VORRICHTUNG ZUR HERSTELLUNG EINES SUBSTRATS ZUR AUFNAHME EINER ELEKTRONISCHEN VORRICHTUNG UND SUBSTRAT
METHOD AND DEVICE FOR MANUFACTURING A SUBSTRATE FOR RECEIVING AN ELECTRONIC DEVICE, AND CORRESPONDING SUBSTRATE

(30) Priorité: 13.10.2011 FR 1159264
(43) Date de publication de la demande: 20.08.2014
(73) Titulaire: Oberthur Technologies, 92700 Colombes (FR)
(72) Inventeur: HUET, Mickaël, F-35370 Breal Sous Vitre (FR); BOSCHET, Jean-François, F-92700 Colombes (FR)
(74) Mandataire: Santarelli
(86) Numéro de dépôt international: PCT/FR2012/052326
(87) Numéro de publication internationale: WO 2013/054056

(56) Documents cités:
- EP-A1- 0 585 111
- EP-A1- 0 585 111
- DE-A1- 19 854 986
- FR-A1- 2 951 866
- US-A- 6 028 774

## Description

La présente invention concerne un procédé de fabrication d'un support destiné à recevoir un dispositif électronique. En particulier, le support peut être destiné à former la couverture d'un passeport.

Un passeport peut être constitué d'un ensemble de feuillets, reliés entre eux, dont le feuillet d'extrémité peut être appelé la couverture. Cette couverture peut être réalisée en un matériau, de préférence fibreux, que l'on appelle support ou Inlay. Ce support peut être recouvert au moins sur sa face extérieure d'au moins une couche de protection. Par face extérieure on peut comprendre la face qui n'est pas en contact avec les feuillets intérieurs. La couverture présente une rigidité plus importante que les feuillets afin de protéger ces derniers. Pour la suite de la description, nous appellerons « support » le matériau qui forme en partie la couverture.

Le support pourrait également permettre de fabriquer des produits destinés à recevoir un dispositif électronique. On pourrait par exemple utiliser le support dans la conception de carte comprenant un dispositif électronique tel que des cartes d'identité, ou des cartes de paiement, et plus particulièrement des cartes sans contact.

Le passeport contient généralement le nom, la photographie d'identité, la signature, la date et le lieu de naissance de son titulaire. On cherche désormais à ajouter au passeport des données biométriques. Ces données sont contenues dans une puce reliée à une antenne sans contact. Cette antenne est destinée à la lecture des données biométriques contenues dans la puce par l'intermédiaire d'un dispositif de lecture sans contact.

Dans un premier temps on a tout d'abord réalisé l'antenne en surface du support, généralement par sérigraphie. Dans ce mode de réalisation on connecte ensuite l'antenne et la puce en déposant cette dernière sur la surface du support. On recouvre enfin l'ensemble de la couche de protection.

Une telle construction laisse toutefois apparaître une protubérance sur la surface de la couverture. Cette protubérance peut poser des problèmes d'homogénéité de l'épaisseur de la couverture. De plus, la puce se trouve seulement protégée par la couche de protection et peut donc continuer à subir d'éventuelles détériorations dues à des chocs.

Dans un deuxième temps, on a cherché à intégrer la puce dans le support en réalisant une cavité dans l'épaisseur du matériau, tout en connectant l'antenne toujours réalisée sur la surface du support.

Cette cavité peut être réalisée par l'intermédiaire d'une fraise dont les dimensions sont légèrement supérieures aux dimensions de la puce. La fraise avance selon un axe sensiblement perpendiculaire à la surface du support, que nous appellerons pour la suite de la description l'axe Z. Un tel procédé peut notamment permettre d'obtenir une cavité dont les bords sont sensiblement nets.

Pour mémoire, la puce utilisée dans les passeports peut présenter des dimensions allant de deux millimètres par deux millimètres à quatre millimètres par quatre millimètres et présenter une épaisseur de l'ordre de 150 micromètres.

Afin de faciliter l'intégration de la puce et de l'antenne avec le support, on cherche à réaliser un module qui comprend l'antenne et la puce. Ce module présente des dimensions bien supérieures aux dimensions de la puce initialement utilisée. L'épaisseur du module est notamment plus importante que l'épaisseur de la puce seule puisqu'il intègre la puce et l'antenne. La largeur et la longueur du module sont également plus importantes que la puce seule puisqu'il intègre l'antenne et que cette dernière doit présenter une surface suffisante pour communiquer avec un dispositif de lecture sans contact.

Afin d'intégrer le module au support il est bien connu de réaliser une cavité par fraisage. Pour que cette cavité s'adapte au mieux au contour du module, la fraise doit progresser selon les 3 axes. Une avancée dans l'épaisseur selon l'axe Z, et des avancées parallèles à la surface du support, selon les axes X et Y. Il s'avère que l'avancée de la fraise dans le support selon les axes X et Y peut créer des bavures, ou résidus de matière, qui peuvent rester accrochées au support. Ces bavures peuvent également rendre plus difficile le positionnement du module dans la cavité. Ces bavures peuvent encore créer des problèmes d'homogénéité de la surface une fois qu'elles sont recouvertes de la couche de protection.

On connait d'après le document DE - 198 54 986 un procédé de formation de cartes en matériau en mousse, en utilisant une compression, localisée autour d'une cavité à former, qui peut se faire au moyen d'un outil à deux étages. La cavité est formée pour pouvoir recevoir un module formé d'une puce et de contacts externes ; lorsqu'un enroulement est envisagé en complément de la puce, des cavités correspondantes sont formées à une même profondeur en étant indépendantes.

On connait aussi d'après le document EP - 0 585 111 un procédé de fabrication de cartes à microcircuit selon lequel, dans un corps formé de plusieurs couches, on découpe une cavité destinée à recevoir le microcircuit.

On connait également, d'après le document FR - 2 951 866, un procédé de fabrication d'un support intégrant au moins un dispositif électronique, ce support comportant au moins une couche fibreuse e papier ou de non-tissé incluant au moins 15% en masse de fibres synthétiques; on introduit le dispositif électronique au moyen d'un outil preneur-poseur en comprimant la couche fibreuse de telle sorte qu'à l'issue de cette introduction, le dispositif électronique est reçu dans le support sans générer de surépaisseur.

On cherche donc à réaliser une cavité conformée pour recevoir un module dont les dimensions sont plus importantes que celles d'une puce traditionnelle tout en minimisant les bavures.

Pour ce faire, l'invention propose un procédé de formation d'un double renfoncement dans un support fibreux. Le double renfoncement comprend un premier renfoncement et un deuxième renfoncement, le double renfoncement étant conformé pour recevoir un module formé d'au moins une antenne et une puce, le procédé comprenant les étapes suivantes :
- Former un premier renfoncement par l'intermédiaire d'un premier dispositif, le premier renfoncement étant définit par un contour C1 et par une profondeur p1, le premier renfoncement étant conformé pour recevoir l'antenne du module, le premier dispositif étant un dispositif de compression comprenant un pied presseur,
- Former un deuxième renfoncement par l'intermédiaire d'un deuxième dispositif, le deuxième renfoncement étant formé à l'intérieur du contour C1 du premier renfoncement, le deuxième renfoncement étant définit par un contour C2 et par une profondeur p2, et étant conformé pour recevoir la puce du module,

Par antenne, on peut comprendre l'antenne en elle-même mais également l'élément apte à supporter au moins un élément destiné à assurer une connexion sans contact entre une puce et un dispositif de lecture sans contact. En l'occurrence, l'antenne peut être réalisée par gravure, sérigraphie et/ou par un enroulement sur un élément sensiblement plan, en matériau naturel et/ou synthétique. De manière préférée, le premier renfoncement a une surface au moins dix fois supérieure à celle du second renfoncement, voire au moins vingt fois cette surface du second renfoncement.

Un tel procédé peut notamment permettre de former une cavité comprenant deux renfoncements tout en limitant la création d'impuretés. En effet, la compression d'un matériau peut notamment permettre d'obtenir des bords sans impuretés puisque l'on n'extrait pas de matière du support.

Ce procédé peut également permettre de préparer par compression le support à d'autres étapes et notamment à des étapes plus destructives de la matière tel que par exemple une étape qui consiste à enlever de la matière comme par exemple une étape de fraisage.

Le procédé comporte avantageusement une étape consistant à fixer un tel module formé d'au moins une antenne et d'une puce dans ledit double renfoncement.

Un tel support peut notamment permettre de recevoir un module comprenant une antenne et une puce tout en protégeant le module sur au moins trois cotés (et même quatre côtés lorsque le double renfoncement n'atteint aucun bord).

Un pied presseur peut avoir l'avantage de présenter un grand nombre de formes et de dimensions et peut donc s'adapter au mieux au format du module et plus particulièrement au format et aux dimensions de l'antenne constituant en partie le module.

L'étape qui consiste à former le premier renfoncement peut comprendre les étapes suivantes :
- Positionner le pied presseur en regard d'une zone choisie sur le support pour implanter l'antenne du module,
- Avancer le pied presseur selon un axe Z de telle sorte qu'il pénètre le support en appliquant une pression « P », pendant un temps « T » afin de former le premier renfoncement.

Le dispositif de compression peut être réglé selon divers paramètres, que nous appellerons paramètres de pressage. Ces paramètres sont destinés à former le renfoncement souhaité dans le support. Ces paramètres peuvent varier en fonction du matériau qui constitue le support et des dimensions du renfoncement destiné à recevoir le module et/ou l'antenne du module.

En particulier, la valeur de pression « P » peut être comprise entre quatre et huit bars. La durée de temps « T » peut s'étendre sur une période allant de une à quatre secondes.

Avantageusement, le pied presseur peut se définir par un pourtour inférieur ou égal au contour C1.

On comprend aisément qu'un pied presseur qui vient en pression sur un support peut créer un renfoncement dans le support dont le pourtour peut être supérieur au pourtour du pied presseur.

Il peut être important que le renfoncement conformé pour recevoir le module soit de dimensions sensiblement identiques au module afin de limiter le jeu du module dans le renfoncement et/ou afin d'assurer une protection optimale du module dans son renfoncement en entourant ce dernier sur au moins trois côtés.

Le support peut être constitué de fibres naturelles et/ou de fibres synthétiques. Avantageusement, le support peut être constitué de fibres naturelles et de fibres synthétiques. Les fibres du support peuvent être liées entre elles par un liant, avantageusement à base d'élastomère. Un tel liant peut notamment permettre d'accroître la souplesse du support. Un tel liant peut également permettre d'augmenter les propriétés de tenue environnementales du support, et notamment sa résistance à l'humidité.

En particulier, le procédé peut être utilisé pour former une double cavité dans un support fibreux comprenant au moins un liant à base d'un matériau élastomère ; l'étape de formation du premier renfoncement du procédé peut alors comprendre une étape qui consiste à :
- Chauffer le pied presseur de telle sorte qu'il atteigne une température « t° » suffisante pour agir sur le liant du support.

Par agir sur le liant, on peut comprendre que le liant à base d'un matériau élastomère soumis à une certaine température peut subir des modifications. En l'occurrence, chauffer le liant peut permettre de ramollir la matière et de compresser plus aisément le support par l'intermédiaire d'un dispositif de compression.

En particulier, la température « t° » au contact entre le pied presseur et le support peut comprendre une valeur d'au moins 150 degrés Celsius et avantageusement comprise entre 150 degrés Celsius et 250 degrés Celsius.

En particulier, l'étape qui consiste à former le deuxième renfoncement peut comprendre les étapes suivantes :
- Positionner le deuxième dispositif en regard de la zone choisie pour implanter la puce du module,
- Avancer le deuxième dispositif selon un axe Z de telle sorte qu'il pénètre le support afin de former le deuxième renfoncement.

Plus particulièrement, le deuxième dispositif peut être avantageusement un dispositif de fraisage comprenant une fraise dont le pourtour est supérieur ou égal au pourtour de la puce de telle sorte que le renfoncement formé par la fraise soit conformé pour recevoir la puce.

Une fraise est un outil rotatif tranchant qui peut permettre de créer une cavité non débouchante. En particulier, la fraise peut s'adapter sur un dispositif de fraisage, ou machine à fraiser.

Le fraisage peut alors être réalisé dans le matériau compressé lors de la formation du premier renfoncement. Cette étape peut permettre de former aisément le deuxième renfoncement dans un matériau préparé à cet effet. Avantageusement, la compression du matériau lors de la formation du premier renfoncement a un rôle positif lors d'une opération de fraisage destinée à former le deuxième renfoncement dans le contour du premier renfoncement. En effet, plus un matériau est compressé moins il génère d'impuretés telles que des bavures lors d'une opération qui consiste à enlever de la matière telle qu'une opération de fraisage. Par ailleurs, le fraisage du deuxième renfoncement peut être réalisé avec moins d'efforts que par compression. En effet, plus la compression est importante plus l'effort mécanique généré doit être important.

En particulier, le deuxième dispositif peut en variante être constitué par un dispositif de compression. Une telle étape peut toutefois nécessiter un effort plus important pour former un deuxième renfoncement dans un matériau déjà compressé.

L'invention concerne également un support qui peut comprendre au moins un double renfoncement réalisé selon le procédé décrit précédemment.

En particulier, la cavité est conformée pour recevoir un module qui peut comprendre au moins une antenne et une puce. La cavité peut comprendre un premier renfoncement, formé par un dispositif de compression, et un deuxième renfoncement, avantageusement formé par un dispositif de fraisage, dans le prolongement du premier renfoncement, le premier renfoncement et le deuxième renfoncement pouvant être conformés pour recevoir respectivement l'antenne et la puce du module. La surface du premier renfoncement est de préférence au moins 10 fois (voire 20 fois) supérieure à celle du second renfoncement.

En particulier, le support peut comprendre une épaisseur supérieure à l'épaisseur du module. Avantageusement, l'épaisseur du support peut être d'au moins 250 micromètres, avantageusement comprise entre 250 micromètres et 1 millimètre et plus particulièrement entre 300 micromètres et 400 micromètres.

L'invention concerne également un ensemble multicouche qui peut comprendre au moins un support tel que définit précédemment et au moins une autre couche.

En particulier, l'autre couche peut être formée d'au moins une feuille en un matériau cellulosique, synthétique ou naturel tel que du cuir.

L'invention concerne également un passeport qui peut comprendre au moins un support et/ou un ensemble multicouche tels que décrits ci-dessus (le support et/ou l'ensemble multicouche pouvant comprendre un double renfoncement conformé pour recevoir un module composé d'au moins une antenne et une puce, ce double renfoncement pouvant être formé selon le procédé décrit précédemment).

L'invention propose également un dispositif de formation d'un double renfoncement dans un support fibreux, le dispositif comprenant :
- Un premier dispositif comprenant un premier moyen pour former un premier renfoncement par compression, et
- Un deuxième dispositif comprenant un deuxième moyen pour former, à l'intérieur du premier renfoncement, un deuxième renfoncement par fraisage.

Avantageusement, le premier moyen peut être un dispositif de compression équipé d'un pied presseur et le deuxième moyen peut être un dispositif de fraisage équipé d'une fraise.

Le premier moyen est avantageusement conçu en sorte de pouvoir chauffer le pied presseur en telle sorte qu'il puisse atteindre une température suffisante pour agir sur le liant d'un support fibreux comprenant au moins un liant à base d'un matériau élastomère.

L'invention pourra être mieux comprise à la lecture de la description qui va suivre, d'exemples non limitatifs de mise en oeuvre de celle-ci, et à l'examen des figures annexées, selon lesquelles :
- La figure 1 représente un support selon l'invention dans lequel on à intégré un module,
- La figure 2 représente l'intégration du module dans le support, et
- Les figures 3a à 3d représentent un procédé de réalisation du support selon l'invention,
- La figure 3e représente en vue de dessus le support de la figure 3d, et
- La figure 4 représente un ensemble multicouche comprenant un support selon l'invention.

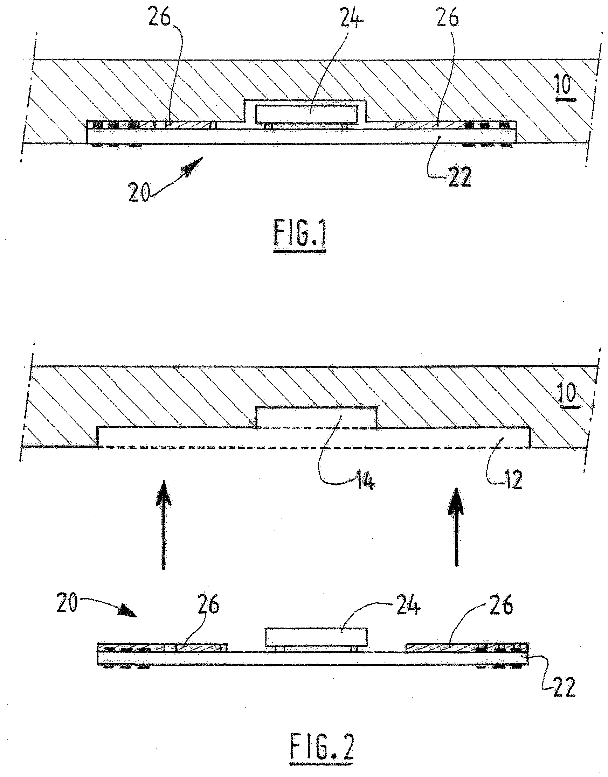

Les figures 1 et 2 représentent un support 10 dans lequel on a formé une cavité composée de deux renfoncements 12 et 14. Ces renfoncements 12 et 14 sont conformés pour recevoir un module 20 composé d'au moins une antenne 22 connectée électriquement à une puce 24.

Le fait d'intégrer directement dans un support un module comprenant une puce et une antenne permet d'améliorer aisément le procédé de fabrication de la couverture d'un passeport. En effet, cette étape peut permettre de supprimer l'étape d'impression par sérigraphie de l'antenne sur le support. Par ailleurs, on supprime également les difficultés que l'on peut rencontrer lors de l'alignement des connections de la puce avec les connections de l'antenne.

Le support 10 correspond à un support classique de la couverture d'un passeport. En l'occurrence, il est constitué d'un mélange de fibres naturelles et de fibres synthétiques liées entre elles par un liant. Les fibres naturelles sont en particulier des fibres cellulosiques et les fibres synthétiques sont un mélange de polyester et de polyamide. Le liant est un élastomère qui peut être de type acrylique et/ou à base de caoutchouc naturel et/ou à base de styrène-butadiène.

Un tel support présente de bonnes aptitudes mécaniques et plus particulièrement une bonne résistance à la pliure. Ce support présente également une plus grande résistance à la déchirure qu'un support formé uniquement à base d'un mélange cellulosique.

Afin de maintenir le module 20 dans la cavité formée à cet effet, on a déposé un adhésif 26 sur au moins une partie de l'antenne destinée à venir en contact avec au moins une partie du support 10. D'autres moyens de maintien du module dans la cavité peuvent être mis en oeuvre par l'homme du métier. Il peut par exemple être envisagé de chauffer au moins en partie le module qui viendra alors ramollir suffisamment le liant, permettant d'amalgamer le module au support.

En fonction des étapes de fabrication de la couverture du passeport il peut être envisagé de ne pas chercher à maintenir le module dans la cavité, notamment si l'on recouvre directement le support par une couche protectrice (50).

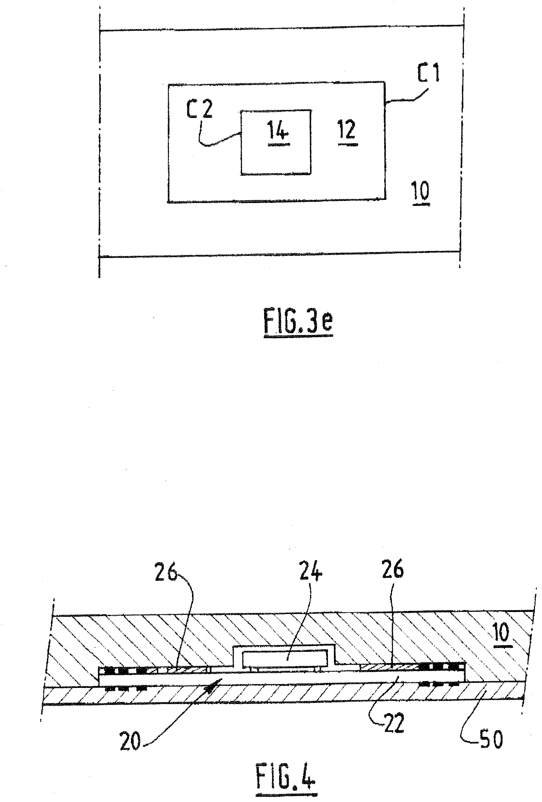

La couverture du passeport peut donc être formée d'un ensemble multicouche comprenant le support (10) et une couche de protection (50), tel que représenté à la figure 4.

Nous allons maintenant décrire plus en détail un exemple d'application du procédé de l'invention.

La 3a représente un support fibreux 10 destinés à former la couche intermédiaire, appelée l'Inlay, de la couverture d'un passeport. Le support décrit par la suite est donné à titre purement indicatif et le procédé de réalisation de l'invention ne doit nullement être limité ni aux matériaux ni au dimensionnement.

Ce support est constitué d'un mélange de fibres cellulosique et de fibres à base de polyamide, liées entre elles par un élastomère acrylique.

L'épaisseur du support 10 est de sensiblement 350 micromètres et ses dimensions sont de l'ordre de 190 millimètres par 135 millimètres. On cherche à intégrer un module 20 formé d'une puce 24 connectée à une antenne 22 dans un double renfoncement 12, 14 formé à cet effet dans le module 10.

Le module présente une épaisseur de sensiblement 250 micromètres, ce qui correspond à l'épaisseur de l'antenne 24, de sensiblement 120 micromètres, et de la puce, de sensiblement 130 micromètres.

Les dimensions extérieures de l'antenne 24 sont de 17,8 millimètres par 27,2 millimètres. Les dimensions extérieures de la puce sont de 3 millimètres par 3 millimètres. Comme pour le support, ces dimensions sont purement indicatives. On retiendra toutefois que la surface de l'antenne est supérieure à la surface de la puce. En particulier, la surface de l'antenne peut être au moins dix fois supérieure à la surface de la puce.

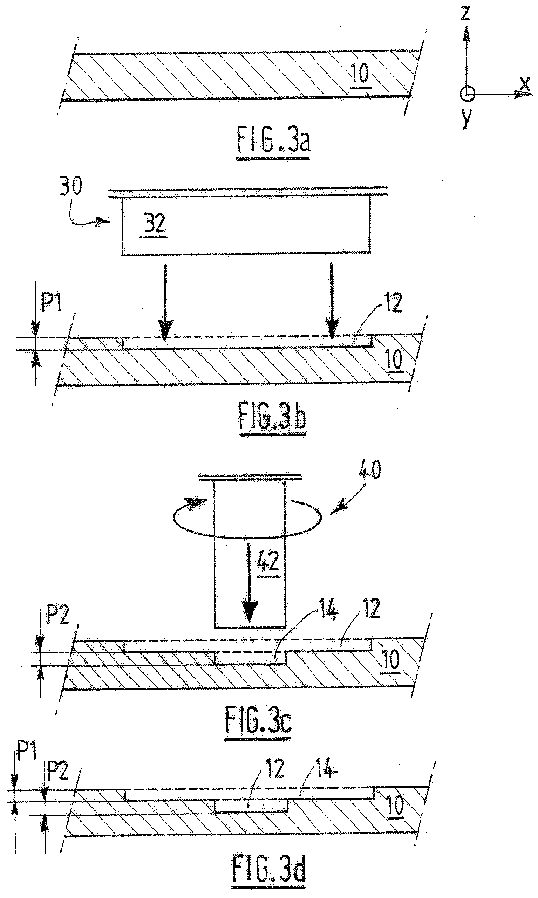

La figure 3b représente une étape qui consiste à former un premier renfoncement 12 par l'intermédiaire d'un premier dispositif 30 de compression comprenant un pied presseur 32. Les dimensions extérieures de ce pied presseur peuvent par exemple être de 17,9 millimètres par 27,3 millimètres. La forme extérieure du pied presseur est similaire à la forme de l'antenne. La forme du pied presseur peut par exemple être sensiblement rectangulaire ou carrée, avec ou sans les coins arrondis. La forme du pied presseur peut également être ronde ou ovale.

Le procédé comprend une étape qui consiste à chauffer le pied presseur 32 à une température « t° » comprise entre 190 degrés Celsius et 210 degrés Celsius. Une fois que le pied presseur 32 atteint la température « t° » indiquée, on avance le pied presseur 32 selon un axe Z de telle sorte que l'on applique une pression « P » comprise entre 5,9 bars et 6,4 bars pendant une durée « T » de 2 secondes entre le pied presseur 32 et le support 10.

Les paramètres de pressage définis par la pression « P », combinée au temps « T » et à la température « t° », permettent de former un premier renfoncement 12 dont la profondeur p1 est de 120 micromètres et dont les dimensions sont de 18 millimètres par 27,4 millimètres, formant un contour C1. Comme on peut le constater, les dimensions du premier renfoncement 12 sont supérieures d'un écart de 100 micromètres par rapport aux dimensions du pied presseur 32. Cet écart peut être variable en fonction des matériaux utilisés pour la fabrication du support 10, de la profondeur p1 souhaitée et éventuellement des paramètres de pressage. Par exemple, un pourcentage de fibres synthétiques plus important et une chaleur plus élevée peuvent permettre de réduire cet écart.

Le procédé peut bien évidemment comprendre une étape qui consiste à retirer ensuite le pied presseur 32 du support 10.

La figure 3c représente une étape qui consiste à former un deuxième renfoncement 14 à l'intérieur du contour C1 du premier renfoncement 12.

Le deuxième renfoncement 14 est formé par un dispositif de fraisage 40 muni d'une fraise 42 dont le diamètre extérieur est d'au moins 4,25 millimètres. Le procédé comprend une étape qui consiste à mettre la fraise 42 en rotation jusqu'à atteindre une vitesse de rotation de l'ordre de 25000 tours/minutes. Une fois que la fraise 42 atteint la vitesse de rotation souhaitée, on avance cette dernière selon l'axe Z de telle sorte que l'on vienne former le deuxième renfoncement 14 jusqu'à atteindre une profondeur p2 de l'ordre de 130 micromètres.

Le dimensionnement de la fraise est notamment fonction des dimensions extérieures de la puce. On comprend que si l'on veut insérer une puce dont les dimensions sont de quatre millimètres par quatre millimètres, l'orifice formé par la fraise doit comprendre un diamètre d'au moins 5,65 millimètres, calculé par le théorème de Pythagore.

La vitesse de rotation de la fraise 42 pourra être ajustée de telle sorte que lorsque la fraise 42 entre en contact avec la surface compressée du support 10 celle-ci ne génère pas, ou peu, d'arrachement de la matière.

Le procédé peut bien évidemment comprendre une étape qui consiste à retirer ensuite la fraise 42 du support 10.

La figure 3d représente le support 10 formée d'un double renfoncement 12, 14 conformé pour recevoir le module 20 tel que définit précédemment.

La figure 3e représente en vue de dessus le support de la figure 3d. On retrouve notamment le support 10, dans lequel on a formé un premier renfoncement 12 par un dispositif de compression, et un deuxième renfoncement 14 par un dispositif de fraisage, le deuxième renfoncement 14 étant formé dans le contour C1 du premier renfoncement 12.

Le double renfoncement 12, 14 ainsi formé dans le support 10, nous allons maintenant décrire à titre indicatif le procédé d'intégration du module 20 dans le support 10.

Le procédé peut comprendre une étape qui consiste à déposer un adhésif 26, par exemple par laminage, sur au moins une partie du module 20 ou du support 10. Ainsi, le module 20 peut adhérer au support 10. L'étape suivante peut consister à disposer le module 20 dans le double renfoncement 12, 14 prévu à cet effet, comme on peut le constater sur la figure 2.

Une fois le support 10 comprenant le module 20 achevé, on peut passer aux différentes étapes de fabrication d'un passeport et par exemple :
- Coller et/ou contre-coller le support avec des couches de protection afin de former une couverture,
- Coudre les feuillets du passeport avec la couverture,
- Amorcer la ligne de pliure du passeport et/ou de la couverture
- Plier le passeport et /ou la couverture
- Découper le passeport et/ou la couverture à sa dimension finale, par exemple par l'intermédiaire d'un emporte-pièce.

On peut également envisager que le support puisse comprendre des dimensions plus importantes, par exemple de 190 millimètres par 270 millimètres. Il est alors possible de couper ce support en deux parties égales, par exemple en parallèle au plus petit côté, afin de former deux couvertures de passeport.

L'homme du métier pourra bien évidemment adapter le procédé de l'invention en fonction des différentes contraintes de fabrication qu'il pourra rencontrer.

L'homme du métier pourra également utiliser le procédé pour former un double renfoncement, ou une double cavité, dont le premier renfoncement peut par exemple être destiné à recevoir un écran.

## Revendications

1. Procédé de formation d'un double renfoncement (12, 14) dans un support fibreux (10), le double renfoncement (12, 14) comprenant un premier renfoncement et un deuxième renfoncement, le double renfoncement étant conformé pour recevoir un module (20) formé d'au moins une antenne (22) et une puce (24), le procédé comprenant les étapes suivantes :
• Former un premier renfoncement (12) par l'intermédiaire d'un premier dispositif (30), le premier renfoncement (12), défini par un contour C1 et par une profondeur p1, étant conformé pour recevoir l'antenne (22) du module (20), le premier dispositif (30) étant un dispositif de compression comprenant un pied presseur (32),
• Former un deuxième renfoncement (14) par l'intermédiaire d'un deuxième dispositif (40), le deuxième renfoncement (14), défini par un contour C2 et par une profondeur p2, étant conformé pour recevoir la puce (14) du module (10), le deuxième renfoncement (14) étant formé à l'intérieur du contour C1 du premier renfoncement (12).

2. Procédé selon la revendication 1, **caractérisé en ce que** le premier renfoncement a une surface au moins dix fois supérieure à celle du second renfoncement.

3. Procédé selon la revendication 1 ou la revendication 2, **caractérisé en ce qu'**il comporte en outre une étape consistant à fixer le module (20) formé d'au moins une antenne (22) et d'une puce (24) dans le double renfoncement.

4. Procédé selon l'une quelconque des revendications 1 à 3, **caractérisé en ce que** l'étape qui consiste à former le premier renfoncement (12) comprend les étapes suivantes :
• Positionner le pied presseur (32) en regard d'une zone choisie sur le support (10) pour implanter l'antenne (22) du module (20),
• Avancer le pied presseur (20) selon un axe Z de telle sorte qu'il pénètre le support (10) en appliquant une pression « P », pendant un temps « T » afin de former le premier renfoncement (12).

5. Procédé selon l'une quelconque des revendications 1 à 4, **caractérisé en ce que**, le support fibreux (10) comprenant au moins un liant à base d'un matériau élastomère, l'étape qui consiste à former le premier renfoncement comprend l'étape suivante :
• Chauffer le pied presseur (32) de telle sorte qu'il atteigne une température « t°°» suffisante pour agir sur le liant du support (10).

6. Procédé selon l'une quelconque des revendications 1 à 5, **caractérisé en ce que** l'étape qui consiste à former le deuxième renfoncement (14) comprend les étapes suivantes :
• Positionner le deuxième dispositif (40) en regard de la zone choisie pour implanter la puce (24) du module (20),
• Avancer le deuxième dispositif (40) selon un axe Z de telle sorte qu'il pénètre le support afin de former le deuxième renfoncement (14).

7. Procédé selon l'une quelconque des revendications 1 à 6, **caractérisé en ce que** le deuxième dispositif (40) est un dispositif de fraisage comprenant une fraise (42) dont le pourtour est supérieur ou égal au pourtour de la puce (24) de telle sorte que le renfoncement (14) formé par la fraise (42) soit conformé pour recevoir la puce (24).

8. Support fibreux (10) comprenant au moins un double renfoncement (12, 14) réalisé selon le procédé selon l'une quelconque des revendications 1 à 7, ce double renfoncement étant conformé pour recevoir un module (20) formé d'au moins une antenne (22) et d'une puce (24) et comportant :
- un premier renfoncement défini par un contour C1 et une profondeur p1, conformé pour recevoir l'antenne du module (20), et
- un second renfoncement défini par un contour C2 et une profondeur p2, conformé pour recevoir la puce (24) du module (10), ce deuxième renfoncement étant formé à l'intérieur du contour C1 du premier renfoncement,
ledit module étant fixé dans ce double renfoncement.

9. Support fibreux selon la revendication 8 dont le double renfoncement comporte un premier renfoncement qui a une surface au moins dix fois supérieure à celle du second renfoncement.

10. Support fibreux selon la revendication 8 ou la revendication 9, comprenant au moins un liant à base d'un matériau élastomère.

11. Ensemble multicouche comprenant au moins un support fibreux (10) tel que défini par l'une quelconque des revendications 8 à 10 et au moins une autre couche.

12. Passeport comprenant au moins un support fibreux (10) selon l'une quelconque des revendications 8 à 10 ou un ensemble multicouche selon la revendication 11.

13. Dispositif de formation d'un double renfoncement (12, 14) dans un support fibreux, le dispositif comprenant :
• Un premier dispositif (30) comprenant un premier moyen pour former un premier renfoncement (12) par compression, et
• Un deuxième dispositif (40) comprenant un deuxième moyen pour former, à l'intérieur du premier renfoncement, un deuxième renfoncement (14) par fraisage.

14. Dispositif selon la revendication 13, **caractérisé en ce que** le premier moyen est un dispositif de compression équipé d'un pied presseur (32) et que le deuxième moyen est un dispositif de fraisage équipé d'une fraise (42).

15. Dispositif selon la revendication 14, **caractérisé en ce que** le premier moyen est conçu en sorte de pouvoir chauffer le pied presseur en telle sorte qu'il puisse atteindre une température suffisante pour agir sur le liant d'un support fibreux comprenant au moins un liant à base d'un matériau élastomère.

## Patentansprüche

1. Verfahren zur Ausbildung einer doppelten Vertiefung (12, 14) in einem faserigen Träger (10), wobei die doppelte Vertiefung (12, 14) eine erste Vertiefung und eine zweite Vertiefung umfasst, wobei die doppelte Vertiefung dafür ausgebildet ist, ein Modul (20) aufzunehmen, das von wenigstens einer Antenne (22) und einem Chip (24) gebildet wird, wobei das Verfahren die folgenden Schritte umfasst:
• Ausbilden einer ersten Vertiefung (12) durch eine erste Vorrichtung (30), wobei die erste Vertiefung (12), die durch eine Kontur C1 und durch eine Tiefe p1 definiert ist, dafür ausgebildet ist, die Antenne (22) des Moduls (20) aufzunehmen, wobei die erste Vorrichtung (30) eine Kompressionsvorrichtung ist, die einen Pressfuß (32) umfasst,
• Ausbilden einer zweiten Vertiefung (14) durch eine zweite Vorrichtung (40), wobei die zweite Vertiefung (14), die durch eine Kontur C2 und durch eine Tiefe p2 definiert ist, dafür ausgebildet ist, den Chip (14) des Moduls (10) aufzunehmen, wobei die zweite Vertiefung (14) im Inneren der Kontur C1 der ersten Vertiefung (12) ausgebildet wird.

2. Verfahren nach Anspruch 1, **dadurch gekennzeichnet, dass** die erste Vertiefung eine Fläche aufweist, die wenigstens zehnmal so groß wie diejenige der zweiten Vertiefung ist.

3. Verfahren nach Anspruch 1 oder Anspruch 2, **dadurch gekennzeichnet, dass** es außerdem einen Schritt umfasst, der darin besteht, das Modul (20), das von wenigstens einer Antenne (22) und einem Chip (24) gebildet wird, in der doppelten Vertiefung zu befestigen.

4. Verfahren nach einem der Ansprüche 1 bis 3, **dadurch gekennzeichnet, dass** der Schritt, welcher darin besteht, die erste Vertiefung (12) auszubilden, die folgenden Schritte umfasst:
• Positionieren des Pressfußes (32) gegenüber einem Bereich, der auf dem Träger (10) für das Einfügen der Antenne (22) des Moduls (20) gewählt wurde,
• Vorwärtsbewegen des Pressfußes (20) entlang einer Achse Z, derart, dass er in den Träger (10) eindringt und dabei während einer Zeit "T" einen Druck "P" ausübt, um die erste Vertiefung (12) auszubilden.

5. Verfahren nach einem der Ansprüche 1 bis 4, **dadurch gekennzeichnet, dass** der faserige Träger (10) wenigstens ein Bindemittel auf der Basis eines elastomeren Materials umfasst, wobei der Schritt, welcher darin besteht, die erste Vertiefung auszubilden, den folgenden Schritt umfasst:
• Erwärmen des Pressfußes (32), derart, dass er eine Temperatur "t°°" erreicht, die ausreichend ist, um auf das Bindemittel des Trägers (10) einzuwirken.

6. Verfahren nach einem der Ansprüche 1 bis 5, **dadurch gekennzeichnet, dass** der Schritt, welcher darin besteht, die zweite Vertiefung (14) auszubilden, die folgenden Schritte umfasst:
• Positionieren der zweiten Vorrichtung (40) gegenüber dem Bereich, der für das Einfügen des Chips (24) des Moduls (20) gewählt wurde,
• Vorwärtsbewegen der zweiten Vorrichtung (40) entlang einer Achse Z, derart, dass sie in den Träger eindringt, um die zweite Vertiefung (14) auszubilden.

7. Verfahren nach einem der Ansprüche 1 bis 6, **dadurch gekennzeichnet, dass** die zweite Vorrichtung (40) eine Fräsvorrichtung ist, die einen Fräser (42) umfasst, dessen Umfang größer als der oder gleich dem Umfang des Chips (24) ist, derart, dass die von dem Fräser (42) gebildete Vertiefung (14) dafür ausgebildet ist, den Chip (24) aufzunehmen.

8. Faseriger Träger (10), welcher wenigstens eine doppelte Vertiefung (12, 14) umfasst, die gemäß dem Verfahren nach einem der Ansprüche 1 bis 7 hergestellt wurde, wobei diese doppelte Vertiefung dafür ausgebildet ist, ein Modul (20) aufzunehmen, das von wenigstens einer Antenne (22) und einem Chip (24) gebildet wird und umfasst:
- eine erste Vertiefung, die durch eine Kontur C1 und eine Tiefe p1 definiert ist und dafür ausgebildet ist, die Antenne des Moduls (20) aufzunehmen, und
- eine zweite Vertiefung, die durch eine Kontur C2 und eine Tiefe p2 definiert ist und dafür ausgebildet ist, den Chip (24) des Moduls (10) aufzunehmen, wobei diese zweite Vertiefung im Inneren der Kontur C1 der ersten Vertiefung ausgebildet ist,
wobei das Modul in dieser doppelten Vertiefung befestigt ist.

9. Faseriger Träger nach Anspruch 8, dessen doppelte Vertiefung eine erste Vertiefung umfasst, welche eine Fläche aufweist, die wenigstens zehnmal so groß wie diejenige der zweiten Vertiefung ist.

10. Faseriger Träger nach Anspruch 8 oder Anspruch 9, welcher wenigstens ein Bindemittel auf der Basis eines elastomeren Materials umfasst.

11. Mehrschichtige Anordnung, welche wenigstens einen faserigen Träger (10), wie durch einen der Ansprüche 8 bis 10 definiert, und wenigstens eine weitere Schicht umfasst.

12. Pass, welcher wenigstens einen faserigen Träger (10) nach einem der Ansprüche 8 bis 10 oder eine mehrschichtige Anordnung nach Anspruch 11 umfasst.

13. Vorrichtung zur Ausbildung einer doppelten Vertiefung (12, 14) in einem faserigen Träger, wobei die Vorrichtung umfasst:
• eine erste Vorrichtung (30), die ein erstes Mittel zum Ausbilden einer ersten Vertiefung (12) durch Kompression umfasst, und
• eine zweite Vorrichtung (40), die ein zweites Mittel zum Ausbilden, im Inneren der ersten Vertiefung, einer zweiten Vertiefung (14) durch Fräsen umfasst.

14. Vorrichtung nach Anspruch 13, **dadurch gekennzeichnet, dass** das erste Mittel eine Kompressionsvorrichtung ist, die mit einem Pressfuß (32) ausgestattet ist, und dass das zweite Mittel eine Fräsvorrichtung ist, die mit einem Fräser (42) ausgestattet ist.

15. Vorrichtung nach Anspruch 14, **dadurch gekennzeichnet, dass** das erste Mittel derart ausgebildet ist, dass es den Pressfuß erwärmen kann, derart, dass er eine Temperatur erreichen kann, die ausreichend ist, um auf das Bindemittel eines faserigen Trägers einzuwirken, der wenigstens ein Bindemittel auf der Basis eines elastomeren Materials umfasst.

## Claims

1. Method for forming a double recess (12, 14) in a fibrous substrate (10), the double recess (12, 14) comprising a first recess and a second recess, the double recess being shaped to receive a module (20) formed of at least one antenna (22) and a chip (24), the method comprising the following steps:
• Forming a first recess (12) by way of a first device (30), the first recess (12), defined by a border C1 and by a depth p1, being shaped to receive the antenna (22) of the module (20), the first device (30) being a compression device comprising a presser foot (32),
• Forming a second recess (14) by way of a second device (40), the second recess (14), defined by a border C2 and by a depth p2, being shaped to receive the chip (14) of the module (10), the second recess (14) being formed inside the border C1 of the first recess (12).

2. Method according to Claim 1, **characterized in that** the first recess has a surface area at least ten times greater than that of the second recess.

3. Method according to Claim 1 or Claim 2, **characterized in that** it furthermore includes a step consisting in fixing the module (20) formed of at least one antenna (22) and of a chip (24) in the double recess.

4. Method according to any one of Claims 1 to 3, **characterized in that** the step that consists in forming the first recess (12) comprises the following steps:
• Positioning the presser foot (32) opposite a zone chosen on the substrate (10) for implanting the antenna (22) of the module (20),
• Moving the presser foot (20) along an axis Z, such that it penetrates the substrate (10), by applying a pressure 'P', for a time 'T' , in order to form the first recess (12).

5. Method according to any one of Claims 1 to 4, **characterized in that**, the fibrous substrate (10) comprising at least one binder based on an elastomeric material, the step that consists in forming the first recess comprises the following step:
• Heating the presser foot (32) such that it reaches a temperature 't°°' sufficient to act on the binder of the substrate (10).

6. Method according to any one of Claims 1 to 5, **characterized in that** the step that consists in forming the second recess (14) comprises the following steps:
• Positioning the second device (40) opposite the zone chosen for implanting the chip (24) of the module (20),
• Moving the second device (40) along an axis Z, such that it penetrates the substrate, in order to form the second recess (14).

7. Method according to any one of Claims 1 to 6, **characterized in that** the second device (40) is a milling device comprising a miller (42), the perimeter of which is greater than or equal to the perimeter of the chip (24), such that the recess (14) formed by the miller (42) is shaped to receive the chip (24).

8. Fibrous substrate (10) comprising at least one double recess (12, 14) produced in accordance with the method according to any one of Claims 1 to 7, this double recess being shaped to receive a module (20) formed of at least one antenna (22) and of a chip (24) and including:
- a first recess defined by a border C1 and a depth p1, shaped to receive the antenna of the module (20), and
- a second recess defined by a border C2 and a depth p2, shaped to receive the chip (24) of the module (10), this second recess being formed inside the border C1 of the first recess,
said module being fixed in this double recess.

9. Fibrous substrate according to Claim 8, the double recess of which fibrous substrate includes a first recess that has a surface area at least ten times greater than that of the second recess.

10. Fibrous substrate according to Claim 8 or Claim 9, comprising at least one binder based on an elastomeric material.

11. Multilayer assembly comprising at least one fibrous substrate (10) as defined in any one of Claims 8 to 10 and at least one other layer.

12. Passport comprising at least one fibrous substrate (10) according to any one of Claims 8 to 10 or a multilayer assembly according to Claim 11.

13. Device for forming a double recess (12, 14) in a fibrous substrate, the device comprising:
• A first device (30) comprising a first means for forming a first recess (12) by compression, and
• A second device (40) comprising a second means for forming, inside the first recess, a second recess (14) by milling.

14. Device according to Claim 13, **characterized in that** the first means is a compression device equipped with a presser foot (32) and **in that** the second means is a milling device equipped with a miller (42).

15. Device according to Claim 14, **characterized in that** the first means is designed in such a way as to be able to heat the presser foot such that it is able to reach a temperature sufficient to act on the binder of a fibrous substrate comprising at least one binder based on an elastomeric material.
